# EUROPÄISCHE PATENTANMELDUNG

(11) **EP 4 120 404 A1**
(43) Veröffentlichungstag der Anmeldung: **18.01.2023**
(21) Anmeldenummer: 22184078.8
(22) Anmeldetag: 11.07.2022
(51) Int. Cl.: H01M 8/04029, H01M 8/04119

(54) **WASSERBASIERTES, KOMBINIERTES KÜHL- UND BEFEUCHTUNGSSYSTEM FÜR EIN BRENNSTOFFZELLENSYSTEM**

(30) Priorität: 12.07.2021 DE 102021117941
(71) Anmelder: Aerostack GmbH, 72581 Dettingen an der Erms (DE)
(72) Erfinder: ALINK, Robert, 72581 Dettingen an der Erms (DE)
(74) Vertreter: LKGLOBAL Lorenz & Kopf PartG mbB Patentanwälte

(57) **Zusammenfassung**

Es wird ein kombiniertes Kühl- und Befeuchtungssystem für ein Brennstoffzellensystem vorgeschlagen, aufweisend einen ersten Leitungsstrang, einen zweiten Leitungsstrang, einen Gasabscheider, und eine Wasserzufuhreinrichtung, wobei der erste Leitungsstrang einen Vorlauf zum Zuführen von Wasser an einen Wärmeübertrager des Brennstoffzellensystems und einen Rücklauf zum Aufnehmen eines Wasser-Wasserdampf-Gemischs aus dem Brennstoffzellensystem aufweist, wobei der Gasabscheider in dem Rücklauf angeordnet ist und dazu ausgebildet ist, den Wasserdampf aus dem Wasser-Wasserdampf-Gemisch zumindest teilweise abzuscheiden und an einem Wasserdampfanschluss bereitzustellen, wobei der zweite Leitungsstrang zum Zuführen eines gasförmigen Fluids an das Brennstoffzellensystem einen Fluideinlass aufweist, wobei der Wasserdampfanschluss mit dem zweiten Leitungsstrang stromabwärts des Fluideinlasses gekoppelt ist, um dem Fluid Wasserdampf beizumischen, und wobei die Wasserzufuhreinrichtung zum Zuführen von Wasser mit dem Vorlauf gekoppelt ist und dazu ausgebildet ist, einen Abscheidungsmassenstrom von Wasserdampf in dem ersten Leitungsstrang auszugleichen.

## Beschreibung

### TECHNISCHES GEBIET

Die Erfindung betrifft ein Kühlsystem für ein Brennstoffzellensystem, ein Fahrzeug mit einem Brennstoffzellensystem und ein Verfahren zum Kühlen und Befeuchten der zugeführten Gase eines Brennstoffzellensystems.

### HINTERGRUND DER ERFINDUNG

Zur emissionsarmen Generierung von elektrischer Leistung mit hohem Wirkungsgrad insbesondere in Fahrzeugen ist bekannt, Brennstoffzellensysteme einzusetzen. Es ist möglich, in einem Flugzeug die zur Bordstromversorgung eingesetzten Generatoren, die von Haupttriebwerken oder einer Hilfsturbine angetrieben werden, durch ein Brennstoffzellensystem zu ersetzen. Ebenso könnte ein solches zur Notstromversorgung verwendet werden. Die beim Betrieb des Brennstoffzellensystems entstehende Wärmeleistung, die in derselben Größenordnung wie die elektrische Leistung liegt, muss zuverlässig abgeführt werden, um den einwandfreien Betrieb des Brennstoffzellensystems zu gewährleisten.

Insbesondere an Bord eines Flugzeugs kann ein Brennstoffzellensystem auf verschiedene Weise gekühlt werden. Ein herkömmlicher Kühlkreislauf kann vorgesehen sein, in dem ein flüssiger Wärmeträger zirkuliert, dabei Wärme von dem Brennstoffzellensystem aufnimmt und über einen externen Kühler in die Umgebung überträgt. DE 10 2009 013 159 A1 beschreibt als weiteres Beispiel etwa einen in eine Außenhaut des Flugzeugs integrierten Kühler, der von Umgebungsluft durchströmbar ist, um von einem Brennstoffzellensystem erzeugte Abwärme an die Flugzeugumgebung abzuführen. DE 10 2009 048 394 A1 schlägt indes vor, einen Kühlkreislauf einzusetzen, der die Wärmeleistung in einen Kraftstofftank einkoppelt. Aus der DE 10 2007 060 428 B3 ist ein Verdampfungskühlsystem zur Kühlung eines Brennstoffzellensystems bekannt, bei dem ein Kühlmedium durch die im Betrieb des Brennstoffzellensystems erzeugte thermische Energie vom flüssigen in den gasförmigen Aggregatzustand überführt wird.

Gleichzeitig wird zum Betrieb von Brennstoffzellen eine Befeuchtung der zugeführten Reaktionsgase benötigt, um ein Austrocknen der ionenleitenden Komponenten zu verhindern. Ein zu starkes Austrocknen würde die Komponenten schädigen, oder die Systemeffizienz durch unzureichende Ionenleitung beeinträchtigen.

### ZUSAMMENFASSUNG DER ERFINDUNG

Es ist eine Aufgabe der Erfindung, ein alternatives Kühlsystem zu schaffen, mit dem Brennstoffzellen effizient gekühlt werden können, wobei gleichzeitig der Bauraumbedarf und die Komplexität möglichst gering sind.

Die Aufgabe wird gelöst durch ein Kühlsystem mit den Merkmalen des unabhängigen Anspruchs 1. Vorteilhafte Ausführungsformen und Weiterbildungen sind den Unteransprüchen der nachfolgenden Beschreibung zu entnehmen.

Es wird ein Kühlsystem für ein Brennstoffzellensystem vorgeschlagen, aufweisend einen ersten Leitungsstrang, einen zweiten Leitungsstrang, einen Gasabscheider, und eine Wasserzufuhreinrichtung, wobei der erste Leitungsstrang einen Vorlauf zum Zuführen von Wasser an einen Wärmeübertrager des Brennstoffzellensystems und einen Rücklauf zum Aufnehmen eines Wasser-Wasserdampf-Gemischs aus dem Brennstoffzellensystem aufweist, wobei der Gasabscheider in dem Rücklauf angeordnet ist und dazu ausgebildet ist, den Wasserdampf aus dem Wasser-Wasserdampf-Gemisch zumindest teilweise abzuscheiden und an einem Wasserdampfanschluss bereitzustellen, wobei der zweite Leitungsstrang zum Zuführen eines gasförmigen Fluids an das Brennstoffzellensystem einen Fluideinlass aufweist, wobei der Wasserdampfanschluss mit dem zweiten Leitungsstrang stromabwärts des Fluideinlasses gekoppelt ist, um dem Fluid Wasserdampf beizumischen, und wobei die Wasserzufuhreinrichtung zum Zuführen von Wasser mit dem Vorlauf gekoppelt ist und dazu ausgebildet ist, einen Abscheidungsmassenstrom von Wasserdampf in dem ersten Leitungsstrang auszugleichen.

Der erste Leitungsstrang steht direkt mit dem Brennstoffzellensystem in Verbindung. In ihm wird Wasser zirkuliert, das über den Vorlauf in den Wärmeübertrager des Brennstoffzellensystems gerät. Dort erfolgt eine thermische Kopplung zwischen dem Brennstoffzellensystem und dem Wasser, sodass das Wasser erwärmt wird. Stromabwärts des Wärmeübertragers ist der Rücklauf angeordnet, der ein Wasser-Wasserdampf-Gemisch aufnimmt. Das Brennstoffzellensystem kann eine Betriebstemperatur von etwa 90° aufweisen, um zumindest teilweise das Wasser zu verdampfen. Der Rücklauf wird folglich von einer Zweiphasenströmung durchströmt, die aus Wasser und Wasserdampf besteht.

Zumindest ein Teil des Wasserdampfs wird durch den Gasabscheider im Rücklauf abgeschieden und an dem Wasserdampfanschluss bereitgestellt. Stromabwärts des Gasabscheiders könnte, bei vollständiger Abscheidung des Wasserdampfs, rein flüssiges Wasser fließen.

Der Wasserdampfanschluss stellt bei laufendem Betrieb des Brennstoffzellensystems daher kontinuierlich Wasserdampf bereit. Dieser kann zum Befeuchten des Brennstoffzellensystems verwendet werden. Dazu kann der Wasserdampf dem Fluid in dem zweiten Leitungsstrang beigemischt werden, das dem Brennstoffzellensystem zugeführt wird. Dies kann beispielsweise Luft sein, die dem Kathodenpfad zugeführt wird. Alternativ dazu kann es sich auch um Wasserstoff oder ein Wasserstoff aufweisendes Gasgemisch handeln, das dem Anodenpfad des Brennstoffzellensystems zugeführt wird. Insgesamt wird das strömende, gasförmige Fluid durch den Eintrag von Wasserdampf befeuchtet. Hierzu ist der Wasserdampfanschluss über eine Verbindungsleitung mit dem zweiten Leitungsstrang verbunden. Dadurch wird der Feuchtigkeitshaushalt der Brennstoffzelle positiv beeinflusst.

Da in dem ersten Leitungsstrang durch das Abschneiden des Wasserdampfs kontinuierlich Wasserdampf aus dem Kühlkreislauf entzogen wird, verringert sich kontinuierlich die Wassermasse in dem ersten Leitungsstrang. Durch die Wasserzufuhreinrichtung kann dies jedoch wieder ausgeglichen werden. Idealerweise bleibt die Wassermasse in dem ersten Leitungsstrang konstant. Die Wasserzufuhreinrichtung ist dazu ausgebildet, kontinuierlich Wasser bereitzustellen und dadurch den Abscheidungsmassenstrom von Wasserdampf, der in den zweiten Leitungsstrang strömt, auszugleichen. Abhängig von der Betriebsstrategie kann die gespeicherte Wassermenge auch temporär reduziert werden und zum Beispiel während des Hochfahrens des Gesamtsystems wieder aufgefüllt werden.

Zur Befeuchtung des Brennstoffzellensystems wäre daher kein zusätzliches Befeuchtungsgerät notwendig. Das Kühlsystem kann folglich eine Doppelfunktion aufweisen und weist überdies mehrere Vorteile auf. Beispielsweise ist ein Ausgleichsbehälter zum Tolerieren einer Ausdehnung eines Kühlmittels innerhalb des ersten Leitungsstrangs nicht notwendig, da eine Volumenzunahme in dem ersten Leitungsstrang durch den Abscheider entfällt. Zudem ist Wasser als Kühlmittel unkompliziert in der Handhabung. Der Gefrierstart kann durch eine gezielte Reduzierung des Kühlmediums, beispielsweise durch Ablassen des Kühlmittels vor einem Herunterfahren des Brennstoffzellensystems, und der damit verbundenen reduzierten Wärmekapazität beschleunigt werden. Auf Grund der bei einer definierten Temperatur anfallenden Verdampfungsenthalpie ist der Temperaturanstieg über der aktiven Fläche im Vergleich zu einer rein wärmekapazitiven Kühlung der Brennstoffzelle vergleichsweise gering. Durch die aktive Zufuhr von Wasserdampf kann zudem eine verbesserte Befeuchtung der zu kühlenden Brennstoffzellen erreicht werden.

Die Wasserzufuhreinrichtung könnte einen Kondensator aufweisen, der dazu ausgebildet ist, Wasserdampf aus dem Brennstoffzellensystem zu kondensieren. Hierzu könnte ein dritter Leitungsstrang vorgesehen sein, der der Abfuhr von Abluft bzw. Abgas aus dem Brennstoffzellensystem dient. Der Kondensator kann in dem dritten Leitungsstrang angeordnet sein und wird von Abluft bzw. Abgas des Brennstoffzellensystems durchströmt. Er stellt Kondensat, d.h. flüssiges Wasser, bereit, das dem ersten Leitungsstrang zugeführt wird. Durch die katalytische Umsetzung von Wasserstoff und Sauerstoff entsteht während des Brennstoffzellenprozesses ein kontinuierlicher Strom an Wasserdampf, der den an dem Wasserdampfanschluss anliegenden Strom an Wasserdampf deutlich übersteigt. Durch den Kondensator kann dieser zumindest teilweise zurückgewonnen werden, um den Wasserbedarf in dem ersten Leitungsstrang zu decken. Dies kann realisiert werden, indem ein Kühler unterhalb der Taupunkttemperatur des Austrittsgases betrieben wird.

Daraus kann sich überdies ein weiterer besonderer Vorteil ergeben, da das Wasser in dem ersten Leitungsstrang durch die Bereitstellung aus Kondensat zumindest nach einer gewissen Betriebsdauer im Wesentlichen destilliertes Wasser ist. Der erste Leitungsstrang kann zu Beginn mit destilliertem Wasser befüllt werden, das durch das Kondensat stets wieder aufgefüllt wird. Da das Brennstoffzellensystem auf ein Kühlmittel mit möglichst geringer Leitfähigkeit angewiesen ist, ist es üblicherweise erforderlich, angesammelte Ionen aus dem Kühlmittel mittels eines Ionenfilters herauszufiltern. Dies wäre in diesem Fall nicht notwendig. Der Einsatz destillierten Wassers kann zudem das Anfallen von Ablagerungen, beispielsweise Kalk, im Wesentlichen verhindern.

Der zweite Leitungsstrang könnte einen Lufteinlass aufweisen und zum Zuführen von Luft an einen Kathodenpfad des Brennstoffzellensystems ausgebildet sein. Eine an das Brennstoffzellensystem bereitgestellte Zuluft kann folglich durch das Kühlsystem befeuchtet werden, sodass der abgeschiedene Wasserdampf dem Kathodenpfad zugeführt wird.

Der zweite Leitungsstrang könnte einen ersten Verdichter zum Verdichten von Luft stromabwärts des Lufteinlasses aufweisen, dem ein Luft-Zwischenkühler nachgeschaltet werden kann, wobei der Wasserdampfanschluss stromabwärts des Luft-Zwischenkühlers mit dem zweiten Leitungsstrang gekoppelt ist. Durch den Luft-Zwischenkühler wird die verdichtete Zuluft auf die Zelltemperatur vortemperiert. Die Beimischung von Wasserdampf nach dem Luft-Zwischenkühler kann indes eine Auskondensation des Wasserdampfs vermeiden, da das Gas bereits auf Zelltemperatur vorkonditioniert wurde. Es könnte sinnvoll sein, die Kopplung des Wasserdampfanschlusses mit dem zweiten Leitungsstrang so dicht wie möglich an dem Brennstoffzellensystem zu gestalten.

In einer Ausführungsform könnte der zweite Leitungsstrang einen Wasserstoffeinlass aufweisen und zum Zuführen von Wasserstoff an einen Anodenpfad des Brennstoffzellensystems ausgebildet sein. Folglich wird bei dieser Variante der Wasserstoff befeuchtet, bevor er in das Brennstoffzellensystem eintritt. Es ist jedoch durchaus vorstellbar, dass beide Varianten gleichzeitig verwendbar sind. Der Wasserdampf könnte folglich einem Zuluftstrom und einen Wasserstoffstrom gleichzeitig befeuchten.

Die Menge an Flüssigwasser im ersten Leitungsstrang könnte über einen Sensor erfasst werden. Abhängig von der gespeicherten Wassermenge könnte die Leistung des Kondensators geregelt werden. Beim Hochfahren des Systems könnte der Kondensator bei hoher Leistung gefahren werden, um den Kühlkreislauf mit Flüssigwasser zu befüllen. Es könnte sich anbieten, die Leistung des Kondensators mittels einer Regeleinheit so zu regeln, dass die Gesamtmasse des Wassers in dem ersten Leitungsstrang auf einen vorgegebenen Wert geregelt wird. Beispielsweise könnte die Gesamtmasse zumindest zeitweise konstant gehalten werden.

Ein zweiter Verdichter könnte dem Wasserdampfanschluss nachgeschaltet sein, der den Wasserdampf auf einen Druck verdichtet, der im Wesentlichen dem Druck im zweiten Strang entspricht oder übersteigt. Ist der zweite Leitungsstrang etwa zum Fördern eines Zuluftstroms an den Kathodenpfad ausgebildet, könnte darin ein Absolutdruck von etwa 2 bar eingestellt sein. Der Wasserdampf an dem Wasserdampfanschluss wird zur aktiven Beimischung dann auf einen Druck von 2 bar oder geringfügig höher gebracht.

Es ist besonders vorteilhaft, wenn ein Absolutdruck in dem ersten Leitungsstrang 1 bar absolut beträgt. Damit wird die Verdampfungstemperatur in dem ersten Leitungsstrang bei Verwendung von reinem Wassers auf 100°C gesetzt. Die Verdampfung des Wassers erfolgt demnach bei 100°C und das Brennstoffzellensystem wird dadurch bei ausreichendem Massenstrom an Wasser, auf 100°C begrenzt. In Fluganwendungen könnten auch geringere Drücke als 1 bar absolut gefahren werden, was zu einer dementsprechend niedrigeren Betriebstemperatur führen würde.

Der Luft-Zwischenkühler thermisch mit dem zweiten Leitungsstrang stromabwärts der Wasserzufuhreinheit und stromaufwärts eines Wasserzufuhranschlusses des zweiten Leitungsstrangs gekoppelt sein. Dadurch würde die komprimierte Luft vor dem Zelleintritt auf die Zelltemperatur temperiert werden. Dadurch könnte entweder ein Überhitzen der Zellen am Gaseintritt bei zu hoher Gastemperatur, zum Beispiel bei starker Kompression, oder ein Auskondensieren der Gasbefeuchtung bei zu geringer Gastemperatur verhindert werden. Der Luft-Zwischenkühler kann demnach einen thermischen Austausch zwischen dem druckbeaufschlagten Luftstrom und dem Wasserstrom in den Vorlauf schaffen.

Die Erfindung betrifft ferner ein Fahrzeug, aufweisend ein Brennstoffzellensystem mit mindestens einer Brennstoffzelle und einem Kühlsystem gemäß der vorhergehenden Beschreibung.

Das Fahrzeug könnte ein Flugzeug sein, wobei das Brennstoffzellensystem und das Kühlsystem in einem druckbeaufschlagten Bereich des Flugzeugs angeordnet sind, und ein mit dem Brennstoffzellensystem koppelbarer Wasserstofftank in einem nicht druckbeaufschlagten Bereich des Flugzeugs angeordnet ist.

Weiterhin betrifft die Erfindung ein Verfahren zum Kühlen eines Brennstoffzellensystems, aufweisend die Schritte des Zuführens von Wasser an einen Wärmeübertrager des Brennstoffzellensystems in einem Vorlauf eines ersten Leitungsstrangs, des Aufnehmens eines Wasser-Wasserdampf-Gemischs aus dem Brennstoffzellensystem in einem Rücklauf des ersten Leitungsstrangs, des Abscheidens zumindest eines Teils des Wasserdampfs aus dem Wasser-Wasserdampf-Gemisch mittels eines Gasabscheiders in dem Rücklauf und Bereitstellen an einem Wasserdampfanschluss, des Zuführens von Wasserdampf aus dem Wasserdampfanschluss in einen zweiten Leitungsstrang, mit dem ein gasförmiges Fluid an das Brennstoffzellensystem geleitet wird, und des Zuführens von Wasser aus einer Wasserzufuhreinrichtung in den Vorlauf zum Ausgleichen des abgeschiedenen Wasserdampfs.

Das Verfahren könnte ferner das Kondensieren von Wasserdampf aus einem Abgasstrom des Brennstoffzellensystems mittels eines Kondensators zum Zuführen an den ersten Leitungsstrang umfassen.

Dabei könnte, wie vorangehend erläutert, das gasförmige Fluid Luft als Oxidant für einen Kathodenpfad oder Wasserstoff als Brennstoff für einen Anodenpfad sein.

Das Kondensieren könnte, wie vorangehend erläutert, mittels eines Kondensators durchgeführt werden, dessen Leistung so geregelt wird, dass die Gesamtmasse des Wassers in dem ersten Leitungsstrang auf einen vorgegebenen Wert geregelt wird. Insbesondere kann die Gesamtmasse zumindest zeitweise konstant gehalten werden.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1 zeigt eine schematische Darstellung eines Brennstoffzellensystems und eines Kühl systems.
Fig. 2 zeigt ein Flugzeug.
Fig. 3 zeigt ein Verfahren als schematisches Blockschaltbild.

### DETAILLIERTE DARSTELLUNG EXEMPLARISCHER AUSFÜHRUNGSFORMEN

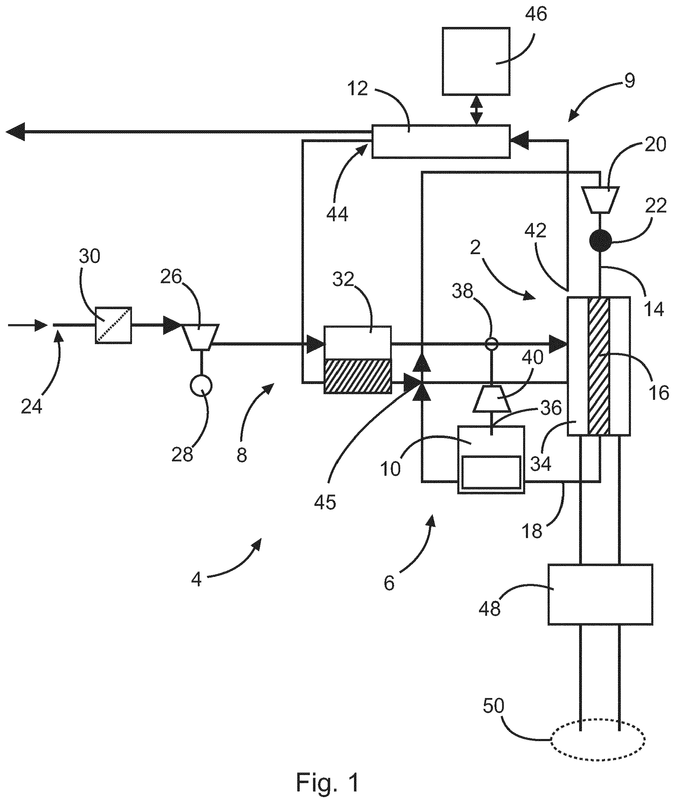

Fig. 1 zeigt ein Brennstoffzellensystem 2, das mit einem kombinierten Kühl- und Befeuchtungssystem 4 gekoppelt ist. Das System 4 weist einen ersten Leitungsstrang 6, einen zweiten Leitungsstrang 8, einen dritten Leitungsstrang 9, einen Gasabscheider 10 und eine Wasserzufuhreinrichtung 12 auf. Letztere ist als Kondensator ausgebildet, wie weiter nachfolgend ausgeführt.

Der erste Leitungsstrang 6 weist einen Vorlauf 14 auf, der mit einem Wärmeübertrager 16 des Brennstoffzellensystems 2 verbunden ist. In dem ersten Leitungsstrang 6 befindet sich reines Wasser, das über den ersten Leitungsstrang 6 in einen Wärmeübertrager 16 des Brennstoffzellensystems 2 geleitet wird, um dort Wärme aufzunehmen. Durch die thermische Wärmeleistung des Brennstoffzellensystems 2 wird das Wasser zumindest teilweise verdampft. Bei einem Absolutdruck von 1 bar in dem ersten Leitungsstrang 6 verdampft das Wasser bei 100°C. Durch das kontinuierliche Nachströmen von Wasser und die kontinuierliche Verdampfung an dem Wärmeübertrager 16 kann die Betriebstemperatur des Brennstoffzellensystems 2 folglich auf die Verdampfungstemperatur von 100°C eingestellt werden. Über das Druckniveau im Verdampfer kann die Temperatur des Brennstoffzellensystems 2 in gewissen Grenzen geregelt werden.

Ein Gemisch aus Wasser und Wasserdampf verlässt den Wärmeübertrager 16 als Zweiphasenströmung und gerät in den Rücklauf 18. Dort wird der Gasabscheider 10 durchströmt, der dazu ausgebildet ist, zumindest einen Teil des Wasserdampf aus der Zweiphasenströmung abzuführen. In dem Vorlauf 14 befindet sich ferner eine Pumpe 20, die beispielsweise über einen Elektromotor 22 betrieben wird. Dieser könnte mit elektrischer Leistung aus dem Brennstoffzellensystem 2 versorgt werden, gegebenenfalls über eine Pufferbatterie, oder aus einer anderen Stromquelle.

Der zweite Leitungsstrang 8 weist einen Lufteinlass 24 auf, durch den Luft oder sauerstoffhaltiges Gas einströmt. Diese wird durch einen ersten Verdichter 26, der mit einem Elektromotor 28 angetrieben sein kann, in den zweiten Leitungsstrang 8 gefördert. Hierbei wird ein Luftfilter 30 durchlaufen. Die verdichtete Luft gelangt in einen Luft-Zwischenkühler 32 und wird dann einem Kathodenpfad 34 des Brennstoffzellensystems 2 zugeführt. Abgeschiedener Wasserdampf aus dem Gasabscheider 10 wird an einem Wasserdampfanschluss 36 bereitgestellt, der mit dem zweiten Leitungsstrang 8 gekoppelt ist. Ein entsprechender Beimischanschluss 38 ist zwischen dem Luft-Zwischenkühler 32 und dem Kathodenpfad 34 vorgesehen. Es ist möglich, hier einen zweiten Verdichter 40 zum Einleiten des Wasserdampfs in den Luftmassenstrom vorzusehen. Der Luftmassenstrom wird durch das Beimischen des Wasserdampfs folglich direkt vor dem Erreichen des Kathodenpfads 34 befeuchtet.

Abluft bzw. Abgas aus dem Brennstoffzellensystem 2 wird an einem Abgasanschluss 42 bereitgestellt. Das Abgas gerät in diesem Beispiel über den dritten Leitungsstrang 9 in die Wasserzufuhreinrichtung 12, die als Kondensator ausgeführt ist und durch Kühlen des Abgases unter den Taupunkt, beispielsweise auf etwa 80°C oder etwas darunter, Wasser auskondensiert. Die Kühltemperatur wird so eingestellt, dass so viel Kondenswasser anfällt, um die Wassermenge im Kühlkreislauf auf ein gewünschtes Niveau einzustellen. Das Kondenswasser fällt an einem Kondensatanschluss 44 an und wird dem ersten Leitungsstrang 6 an einem Wasserzufuhranschluss 45 zugeführt, wodurch der durch die Befeuchtung verursachte Verlust von Wasserdampf wieder ausgeglichen werden kann. Vor dem Eintritt in den ersten Leitungsstrang 6 kann das Wasser zur Temperierung des eingeleiteten Gases in einem Luft-Zwischenkühler 32 verwendet werden. Der Kondensator 12 kann mit einer Regeleinheit 46 gekoppelt sein, die dazu ausgebildet ist, die Leistung des Kondensators 12 so zu regeln, dass die Gesamtmasse des Wassers in dem zweiten Leitungsstrang 6 einer vorgebbaren Gesamtmasse entspricht und/oder konstant ist.

Bei einer Betriebstemperatur des Brennstoffzellensystems 2 von 100°C und 2 bar Gasdruck im Leitungsstrang 8 kann durch die Menge des verdampften Kühlwassers ein Befeuchtungsgrad des Zuluftstroms von etwa 78 %RH, bei einer Gasstöchiometrie von 1,8 (dem Verhältnis von bereitgestellter Luftmenge zu verbrauchter Luftmenge) erfolgen. Am Abgasanschluss kann die Luftfeuchtigkeit aufgrund des durch zusätzlich produzierten Wassers bei ungefähr 96 % RH liegen. Zur Rückgewinnung einer ausreichenden Wassermenge ist theoretisch eine Temperatur von ca. 79 °C notwendig. Bei diesen Betriebspunkten kann ein effizienter Betrieb des Brennstoffzellensystems 2 bei hohen Umwandlungswirkungsgraden ermöglicht werden.

Das Brennstoffzellensystem 2 ist hier mit einem Gleichspannungswandler 48 verbunden, der dazu ausgebildet ist, an einem Spannungsanschluss 50 eine Gleichspannung mit vorbestimmter Höhe bereitzustellen. Diese kann an einen hier nicht dargestellten Spannungsbus geleitet werden. Damit können die Elektromotoren 22 und 28 verbunden sein, um das Kühl- und Befeuchtungssystem 4 zu betreiben.

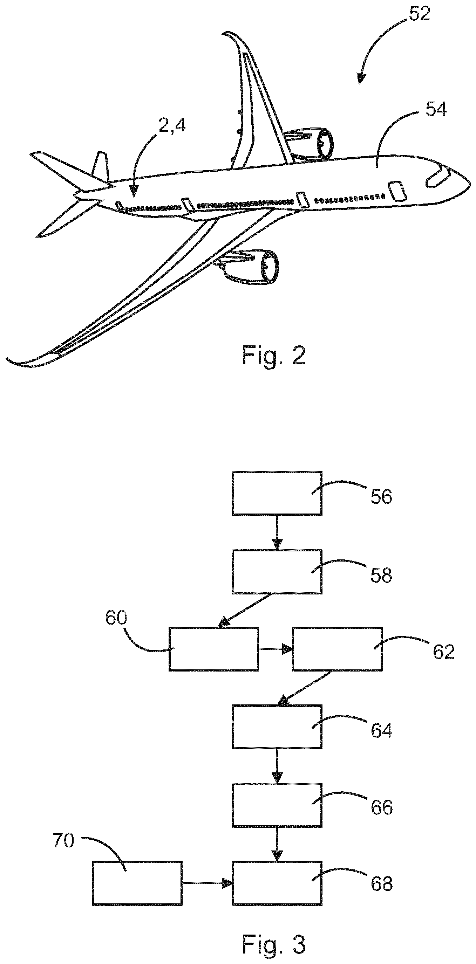

Fig. 2 zeigt ein Flugzeug 52, welches mit einem Brennstoffzellensystem 2 und einem Kühl- und Befeuchtungssystem 4 ausgestattet ist. Das Brennstoffzellensystem 2 ist in einem hinteren Bereich des Flugzeugs 52 angeordnet, beispielsweise unterhalb eines Fußbodens und vor einem Druckschott, d.h. in einem druckbeaufschlagten Bereich eines Rumpfs 54.

Schließlich zeigt Fig. 3 eine schematische Darstellung eines Verfahrens zum Kühlen des Brennstoffzellensystems 2 und weist die Schritte des Zuführens 56 von Wasser an den Wärmeübertrager 16 des Brennstoffzellensystems 2 in dem Vorlauf 14 eines ersten Leitungsstrangs 8, des Aufnehmens 58 eines Wasser-Wasserdampf-Gemischs aus dem Brennstoffzellensystem 2 in dem Rücklauf 18 des ersten Leitungsstrangs 8, des Abscheidens 60 zumindest eines Teils des Wasserdampfs aus dem Wasser-Wasserdampf-Gemisch mittels des Gasabscheiders 10 in dem Rücklauf 18 und Bereitstellens 62 an dem Wasserdampfanschluss 36, des Zuführens 64 von Wasserdampf aus dem Wasserdampfanschluss 36 in den zweiten Leitungsstrang 8, mit dem ein gasförmiges Fluid an das Brennstoffzellensystem 2 geleitet wird, und des Zuführens 66 von Wasser aus der Wasserzufuhreinrichtung 12 in den Vorlauf 14 zum Ausgleichen des abgeschiedenen Wasserdampfs auf. Dem Zuführen 66 kann das Kondensieren 68 von Wasserdampf aus einem Abgasstrom des Brennstoffzellensystems 2 mittels des Kondensators 12 vorgehen. Dessen Leistung kann so geregelt werden 70, dass die Gesamtmasse des Wassers in dem ersten Leitungsstrang 6 auf einen vorgegebenen Wert und insbesondere konstant gehalten wird.

### BEZUGSZEICHEN

- 2: Brennstoffzellensystem
- 4: Kühl system
- 6: erster Leitungsstrang
- 8: zweiter Leitungsstrang
- 9: dritter Leitungsstrang
- 10: Gasabscheider
- 12: Wasserzufuhreinrichtung / Kondensator
- 14: Vorlauf
- 16: Wärmeübertrager
- 18: Rücklauf
- 20: Pumpe
- 22: Elektromotor
- 24: Lufteinlass / Fluideinlass
- 26: erster Verdichter
- 28: Elektromotor
- 30: Luftfilter
- 32: Luft-Zwischenkühler
- 34: Kathodenpfad
- 36: Wasserdampfanschluss
- 38: Beimischanschluss
- 40: zweiter Verdichter
- 42: Abgasanschluss
- 44: Kondensatanschluss
- 45: Wasserzufuhranschluss
- 46: Regeleinheit
- 48: Gleichspannungswandler
- 50: Spannungsanschluss
- 52: Flugzeug
- 54: Rumpf
- 56: Zuführen
- 58: Aufnehmen
- 60: Abscheiden
- 62: Bereitstellen
- 64: Zuführen
- 66: Zuführen
- 68: Kondensieren
- 70: Regeln

## Patentansprüche

1. Kühl- und Befeuchtungssystem (4) für ein Brennstoffzellensystem, aufweisend:
- einen ersten Leitungsstrang (6),
- einen zweiten Leitungsstrang (8),
- einen Gasabscheider (10), und
- eine Wasserzufuhreinrichtung (12),
wobei der erste Leitungsstrang (6) einen Vorlauf (14) zum Zuführen von Wasser an einen Wärmeübertrager (16) des Brennstoffzellensystems (2) und einen Rücklauf (18) zum Aufnehmen eines Wasser-Wasserdampf-Gemischs aus dem Brennstoffzellensystem (2) aufweist,
wobei der Gasabscheider (10) in dem Rücklauf (18) angeordnet ist und dazu ausgebildet ist, den Wasserdampf aus dem Wasser-Wasserdampf-Gemisch zumindest teilweise abzuscheiden und an einem Wasserdampfanschluss (36) bereitzustellen,
wobei der zweite Leitungsstrang (8) zum Zuführen eines gasförmigen Fluids an das Brennstoffzellensystem (2) einen Fluideinlass (24) aufweist,
wobei der Wasserdampfanschluss (36) mit dem zweiten Leitungsstrang (8) stromabwärts des Fluideinlasses (24) gekoppelt ist, um dem Fluid Wasserdampf beizumischen, und
wobei die Wasserzufuhreinrichtung (12) zum Zuführen von Wasser mit dem Vorlauf (14) gekoppelt ist und dazu ausgebildet ist, einen Abscheidungsmassenstrom von Wasserdampf aus dem ersten Leitungsstrang (6) auszugleichen.

2. Kühl- und Befeuchtungssystem (4) nach Anspruch 1,
ferner aufweisend einen dritten Leitungsstrang (9) zum Abführen von Abgas des Brennstoffzellensystems (2),
wobei der dritte Leitungsstrang (9) mit einem Abgasanschluss (42) verbunden ist,
wobei die Wasserzufuhreinrichtung (12) einen Kondensator (12) aufweist, der dazu ausgebildet ist, Wasserdampf aus dem Brennstoffzellensystem zu kondensieren.

3. Kühl- und Befeuchtungssystem nach Anspruch 1 oder 2,
wobei der zweite Leitungsstrang (8) einen Lufteinlass (24) aufweist und zum Zuführen von Luft an einen Kathodenpfad (34) des Brennstoffzellensystems (2) ausgebildet ist.

4. Kühl- und Befeuchtungssystem (4) nach Anspruch 3,
wobei der zweite Leitungsstrang (8) einen ersten Verdichter (26) zum Verdichten von Luft stromabwärts des Lufteinlasses (24) aufweist, dem ein Luft-Zwischenkühler (32) nachgeschaltet ist, und
wobei der Wasserdampfanschluss (36) stromabwärts des Zwischenkühlers (32) mit dem zweiten Leitungsstrang (8) gekoppelt ist.

5. Kühl- und Befeuchtungssystem (4) nach Anspruch 1 oder 2,
wobei der zweite Leitungsstrang (8) einen Wasserstoffeinlass aufweist und zum Zuführen von Wasserstoff an einen Anodenpfad des Brennstoffzellensystems (2) ausgebildet ist.

6. Kühl- und Befeuchtungssystem (4) nach Anspruch 2,
ferner aufweisend eine mit dem Kondensator (12) gekoppelte Regeleinheit (46), die dazu ausgebildet ist, die Leistung des Kondensators (12) so zu regeln, dass die Gesamtmasse des Wassers in dem ersten Leitungsstrang (6) auf einen vorgegebenen Wert geregelt wird.

7. Kühl- und Befeuchtungssystem (4) nach einem der vorhergehenden Ansprüche,
wobei ein zweiter Verdichter (40) dem Wasserdampfanschluss (36) nachgeschaltet ist, der den Wasserdampf auf einen Druck verdichtet, der im Wesentlichen dem Druck im zweiten Leitungsstrang (8) entspricht oder übersteigt.

8. Kühl- und Befeuchtungssystem (4) nach einem der vorhergehenden Ansprüche,
wobei ein Absolutdruck in dem ersten Leitungsstrang (6) 1 bar beträgt.

9. Kühl- und Befeuchtungssystem (4) nach den Ansprüchen 4 und 6,
wobei der Luft-Zwischenkühler (32) thermisch mit dem zweiten Leitungsstrang (8) stromabwärts der Wasserzufuhreinheit (12) und stromaufwärts eines Wasserzufuhranschlusses (45) des zweiten Leitungsstrangs (6) gekoppelt ist.

10. Fahrzeug (52), aufweisend ein Brennstoffzellensystem (2) mit mindestens einer Brennstoffzelle und einem Kühl- und Befeuchtungssystem (4) nach einem der vorhergehenden Ansprüche.

11. Fahrzeug (52) nach Anspruch 10,
wobei das Fahrzeug (52) ein Flugzeug (52) ist,
wobei das Brennstoffzellensystem (2) und das Kühl- und Befeuchtungssystem (4) in einem druckbeaufschlagten Bereich des Flugzeugs (52) angeordnet sind, und
ein mit dem Brennstoffzellensystem (2) koppelbarer Wasserstofftank in einem nicht druckbeaufschlagten Bereich des Flugzeugs (52) angeordnet ist.

12. Verfahren zum Kühlen eines Brennstoffzellensystems, aufweisend die Schritte:
- Zuführen (56) von Wasser an einen Wärmeübertrager (16) des Brennstoffzellensystems (2) in einem Vorlauf (14) eines ersten Leitungsstrangs (6),
- Aufnehmen (58) eines Wasser-Wasserdampf-Gemischs aus dem Brennstoffzellensystem (2) in einem Rücklauf (18) des ersten Leitungsstrangs (6),
- Abscheiden (60) zumindest eines Teils des Wasserdampfs aus dem Wasser-Wasserdampf-Gemisch mittels eines Gasabscheiders (10) in dem Rücklauf (18) und Bereitstellen (62) an einem Wasserdampfanschluss,
- Zuführen (64) von Wasserdampf aus dem Wasserdampfanschluss (36) in einen zweiten Leitungsstrang (8), mit dem ein gasförmiges Fluid an das Brennstoffzellensystem geleitet wird, und
- Zuführen (66) von Wasser aus einer Wasserzufuhreinrichtung (12) in den Vorlauf zum Ausgleichen des abgeschiedenen Wasserdampfs.

13. Verfahren nach Anspruch 12, ferner aufweisend:
Kondensieren (68) von Wasserdampf aus einem Abgasstrom des Brennstoffzellensystems (2) mittels eines Kondensators (12) zum Zuführen an den ersten Leitungsstrang (6).

14. Verfahren nach Anspruch 12 oder 13,
wobei das gasförmige Fluid Luft als Oxidant für einen Kathodenpfad (34) ist oder Wasserstoff als Brennstoff für einen Anodenpfad.

15. Verfahren nach Anspruch 13,
wobei das Kondensieren (68) mittels eines Kondensators (12) durchgeführt wird, dessen Leistung so geregelt wird, dass die Gesamtmasse des Wassers in dem ersten Leitungsstrang (6) konstant gehalten wird.
